# EUROPÄISCHE PATENTANMELDUNG

(11) **EP 2 272 332 A2**
(43) Veröffentlichungstag der Anmeldung: **12.01.2011**
(21) Anmeldenummer: 10001259.0
(22) Anmeldetag: 08.02.2010
(51) Int. Cl.: A01K 51/00, A01M 1/20

(54) **Verdunstungsvorrichtung zur Bekämpfung von Schädlingen**

(30) Priorität: 13.02.2009 DE 202009002120 U
(71) Anmelder: KDVW GmbH & Co. KG, 33803 Steinhagen (DE)
(72) Erfinder: Hörmann, Jan, 33803 Steinhagen (DE)
(74) Vertreter: Brandt, Detlef

(57) **Zusammenfassung**

Es wird eine Verdunstungsvorrichtung zur Bekämpfung von Schädlingen, vorzugsweise in Bienenstöcken, mit einem Vorratsbehälter für das Schädlingsbekämpfungsmittel, einer Dosiereinheit zum kontrollierten Austritt des Schädlingsbekämpfungsmittels aus dem Vorratsbehälter und einem Verdunstungselement zur Vergasung des Schädlingsbekämpfungsmittels, vorgestellt, bei der erfindungsgemäßdie Dosiereinheit (2) eine elektrisch betätigte und durch eine Steuereinheit (4) regelbare Dosierpumpe (2) aufweist.

## Beschreibung

### Technisches Umfeld

Die Erfindung betrifft eine Verdunstungsvorrichtung zur Bekämpfung von Schädlingen, vorzugsweise in Bienenstöcken, mit einem Vorratsbehälter für das Schädlingsbekämpfungsmittel und einer Dosiereinheit zum kontrollierten Austritt des Schädlingsbekämpfungsmittels aus dem Vorratsbehälter in ein Verdunstungselement zur Vergasung des Schädlingsbekämpfungsmittels.

### Stand der Technik

Verdunstungsvorrichtungen der eingangs geschilderten Art sind aus dem Stand der Technik hinlänglich bekannt und werden immer dann eingesetzt, wenn gasförmige Stoffe in einer definierten Umgebung, wie beispielsweise geschlossenen Räumen wie Bienenstöcken oder Ställen zur Schädlingsbekämpfung zum Einsatz kommen. Ein bevorzugtes Anwendungsgebiet für derartige gattungsgemäße Vorrichtungen hat sich innerhalb der letzten Jahre bei der Bekämpfung der Varroamilbe im europäischen Raum ergeben.

Bei dem durch die Varroamilbe hervorgerufenen Parasitenbefall, welcher als sogenannte Varroose bekannt ist, werden Honigbienen und deren Brut durch die Varroamilbe befallen, die sich ähnlich einem Blutegel beim Säugetier an der Population eines Bienenvolkes festbeißt. Der Schädling hat mittlerweile sowohl in Europa im Winter 2002, 2003 als auch in den Vereinigten Staaten im Winter 2006, 2007 bis zu 30% der vorhandenen Bienenvölker befallen und zerstört. Zur Bekämpfung der Varroamilbe werden als Maßnahmen nach neuesten Forschungen sowohl eine Drohnenbrutentnahme aus dem Bienenstock im Frühjahr als auch zusätzlich insbesondere im Herbst der Einsatz von Gasen organischer Säuren, wie Milch-, Oxal- oder Ameisensäure in den Bienenstöcken empfohlen.

Für die Bereitstellung der entsprechenden Schädlingsbekämpfungsgase setzen Imker die eingangs geschilderten Verdunstungsvorrichtungen ein. Diese bestehen üblicherweise aus einem Vorratsbehälter, welcher mittels einer aus Löchern bestehenden Dosiereinheit das flüssige Schädlingsbekämpfungsmittel auf ein als Verdunstungsmatte bezeichnetes Verdunstungselement träufelt, von dem aus das Schädlingsbekämpfungsmittel in gasförmiger Form sich im Bienenstock verbreitet. Die Dosierung der Gase hängt dabei in starkem Maße von der Umgebungstemperatur im Bienenstock sowie von der Anzahl der Löcher in der Dosiereinheit ab.

Eine Veränderung der Gaskonzentration ist dabei in aller Regel nur durch Umbau der Dosiereinheit mittels Entnahme der Verdunstungsvorrichtung aus dem Bienenstock möglich. Eine Anpassung der Verdunstungsmenge an unterschiedliche Temperatureinheiten ist somit in aller Regel nur umständlich möglich.

Um eine genauere Dosierung des Schädlingsbekämpfungsmittels herbeizuführen, ist vereinzelt wie beispielsweise in der DE 33 35 808 A1 der Einsatz von elektrischen Pumpen zur Förderung des Schädlingsbekämpfungsmittels aus dem Vorratsbehälter vorgeschlagen worden. Die dort beschriebenen Pumpen arbeiten als zentrale Förderpumpe für einen zentralen Verteiler, welcher mehrere im Aufbau überaus komplexe Zumesseinrichtungen beinhaltet. Der Gesamtaufbau einer derartigen Verdunstungsvorrichtung ist aufgrund der Vielzahl der zugehörigen Einzelbauteile der Dosiereinheit konstruktiv aufwendig, montagetechnisch zeitintensiv und somit insgesamt unter Kostengesichtspunkten äußerst nachteilig.

### Aufgabe der Erfindung

Ausgehend von dem geschilderten Stand der Technik besteht die Aufgabe der Erfindung darin, eine Verdunstungsvorrichtung der eingangs geschilderten gattungsgemässen Art so weiter zu entwickeln, dass eine problemlose Anpassung der Schädlingsbekämpfungsmitteldosierung an die räumlichen Einsatzgebiete und Umweltbedingungen vorgenommen werden kann.

Die erfindungsgemäße Verdunstungsvorrichtung soll darüber hinaus preiswert herstellbar und unter ergonomischen Gesichtspunkten leicht handhabbar sein. Es ist hierbei zusätzlich beachtlich, dass die eingesetzten Schädlingsbekämpfungsmittel für den Imker durch ihre ätzenden Eigenschaften nicht ungefährlich sind, so dass durch die neuartige Verdunstungsvorrichtung ein Kontakt mit dem eingesetzten Schädlingsbekämpfungsmittel möglichst vermieden werden soll.

### Lösung der Aufgabe

Die gestellte Aufgabe wird für eine Verdunstungsvorrichtung mit den gattungsgemässen Merkmalen des Anspruches 1 durch die im kennzeichnenden Teil des Hauptanspruches offenbarte technische Lehre gelöst.

Erfindungswesentlich dabei ist es, dass die Dosiereinheit eine elektrisch betätigte und durch eine Steuereinheit regelbare Dosierpumpe aufweist. Eine derartige Gestaltung ermöglicht erstmals eine genaue Dosierung der aus dem Vorratsbehälter zu entnehmenden Schädlingsbekämpfungsmittelflüssigkeit, um auf diese Weise unterschiedliche Gaskonzentrationen für eine vorgegebene Verdunstungsmattengröße bereitzustellen. Das Maß der Konzentration lässt sich dabei in weiten Bereichen durch Regelung der Dosierpumpenfördermenge variieren, ohne dass umständliche Umbauten der Verdunstungsvorrichtung durch Änderung der Dosiereinheit oder der Größe der Verdunstungsmatte notwendig sind.

Besondere Ausgestaltungen des erfindungsgemäßen Gegenstandes ergeben sich im Zusammenhang mit der technischen Lehre des Anspruches 1 zusätzlich aus den auf diesen rückbezogenen Unteransprüchen.

Es hat sich insbesondere als vorteilhaft erwiesen, die Dosierpumpe als Mikro-Membran-Dosierpumpe auszubilden. Derartige Dosierpumpen sind seit kurzem im Bereich der Medizin und Pharmazie im Einsatz und zeichnen sich durch eine hohe Dosiergenauigkeit, kleine Bauabmaße und einen niedrigen Preis aus.

Zur Energieversorgung derartiger Dosierpumpen sowie der zugehörigen Steuereinheit können vorteilhafterweise Batterie- oder wiederaufladbare Akkuelemente eingesetzt werden. Beim Einsatz dieser Bauteile kann dabei auf den Zugang zu einer Netzstromversorgung verzichtet werden, wobei eine weitere zweckmäßige Weiterbildung des Erfindungsgedankens darin besteht, für die Aufladung des Akkuelementes eine solarbetriebene Versorgungseinheit räumlich getrennt von der Verdunstungseinrichtung anzuordnen und mit einer Verbindungsleitung an das Akkuelement der Verdunstungsvorrichtung zu koppeln.

Die Energieversorgung kann somit auch bei nicht vorhandener Netzstromversorgung jederzeit dadurch gewährleistet sein, dass die solarbetriebene Versorgungseinheit außerhalb des räumlichen Einsatzgebietes der Verdunstungseinrichtung, beispielsweise an der Außenseite eines Bienenstockes angebracht wird.

Um die Regelung der Verdunstungsgase zusätzlich zu erleichtern, sieht eine zweckmäßige Weiterbildung der Verdunstungsvorrichtung darüber hinaus vor, die Steuereinheit mit einem Sender- und Empfangsmodul zu versehen, durch welches Einstelldaten und Verbrauchsdaten an ein räumlich von der Verdunstungseinheit getrennt angeordnetes Anzeige- und Eingabemodul übermittelbar sind.

Die Übermittlung der Einstell- und Verbrauchsdaten kann dabei mittels einer drahtlosen Kommunikationsverbindung, beispielsweise über Funk oder Bluetooth, mit der Anzeige- und Eingabeeinheit erfolgen. Auf diese Weise lassen sich gegebenenfalls unter Einsatz entsprechender Sensoren die Verdunstungsmengen exakt auf die gegebenen Rahmenbedingungen im Bienenstock, wie beispielsweise Temperatur, Lautstärke oder Vibrationen als Kriterium einer Schwarmtätigkeit des Bienenvolkes abstimmen.

Darüber hinaus sind selbstverständlich weitere Überwachungsdaten, wie der drohende Verlust der Energieversorgung in Folge eines entladenen Akkulelementes oder ein Leerstand des Versorgungsbehälters problemlos zu übermitteln. Somit können Unterbrechungszeiten bei der Schädlingsbekämpfung ausgeschlossen werden.

Die Anzeige- und Eingabeeinheit kann vorteilhafterweise aus einer Tastatureinheit und einem Bildschirm bestehen, die für andere Einsatzgebiete bereits kostengünstig am Markt verfügbar sind.

Zusätzliche Sicherheit in Bezug auf die konstruktive Gestaltung der erfindungsgemäßen Verdunstungsvorrichtung kann ergänzend darin bestehen, dass die Dosierpumpe räumlich über dem Vorratsbehälter angeordnet wird, so dass ein versehentliches Auslaufen des Schädlingsbekämpfungsmittels in Folge einer kurzzeitigen Funktionsstörung der Verdunstungsvorrichtung ausgeschlossen wird, sofern nicht schon durch die angeschlossene Steuereinheit in Verbindung mit der Übermittlung von Stördaten durch das Sende- und Empfangsmodul an die Anzeige- und Eingabeeinheit eine Fehlermeldung erfolgt.

### Figurenbeschreibung

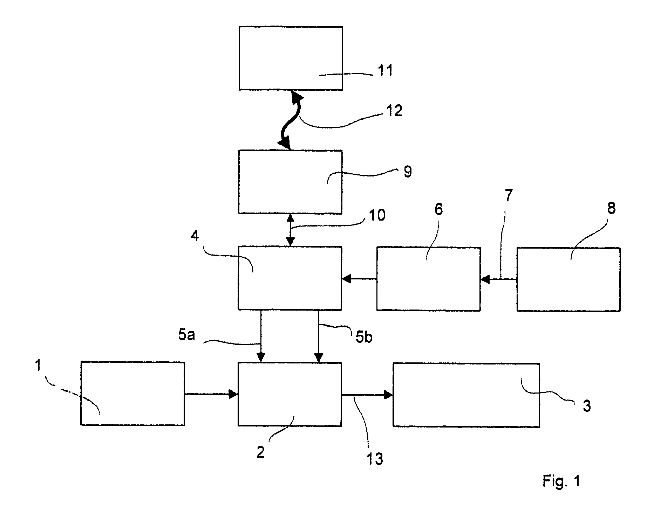

Im Folgenden wird ein Ausführungsbeispiel des Gegenstandes der Erfindung anhand der beigefügten Zeichnung näher erläutert. Die Zeichnung zeigt dabei einen Blockschaltplan der verschiedenen, zur Verdunstungsvorrichtung gehörenden neuen Baugruppen und bietet damit einen guten Überblick über deren Funktionsweise.

Die schematische Darstellung der neuartigen Verdunstungsvorrichtung zeigt, dass diese prinzipiell zur Bereitstellung der Verdunstungsgase aus einem Vorratsbehälter 1 für das Schädlingsbekämpfungsmittel, einer Dosiereinheit 2 zur kontrollierten Zuführung des Schädlingsbekämpfungsmittels zu einem Verdunstungselement 3 bestehtVerdu, welches durch den Pfeil 13 verdeutlicht ist und einem Verdunstungselement 3 zur Vergasung des Schädlingsbekämpfungsmittels besteht.

Erfindungsgemäß ist die Dosiereinheit 2 als elektrisch betätigte Dosierpumpe ausgebildet, die mittels einer Steuereinheit 4 regelbar ist. Die Verbindung zwischen Steuereinheit 4 und Dosiereinheit 2 erfolgt über die Steuerleitungen 5, wobei eine bidirektionale Kommunikation zwischen den Bauelementen möglich ist.

Die Energieversorgung der Dosierpumpe und der Steuereinheit wird durch ein Batterie oder ein Akkuelement 6 sichergestellt. Das Akkuelement kann zum Zweck der Wiederaufladung an das Stromnetz anschließbar sein, vorteilhaft ist jedoch auch, das Akkuelement 6 über die Versorgungsleitung 7 an eine solarbetriebene Versorgungseinheit 8 anzuschließen. Auf diese Weise ist die gesamte Verdunstungsvorrichtung standortunabhängig. Eine von außen standortunabhängige Kommunikation mit der Steuereinheit 4 kann entsprechend einer vorteilhaften Ausgestaltung der Erfindung mittels eines Sender/Empfangsmoduls 9 gewährleistet werden. Das Sender/Empfangsmodul 9 ist mit der Steuereinheit 4 über eine bidirektionale Verbindungsleitung 10 verbunden und kann die von einer Anzeige- und Eingabeeinheit 11 gesendeten Steuerbefehle an die Steuereinheit 4 einerseits und andererseits Sensordaten von der Steuereinheit 4 an die Anzeige- und Eingabeeinheit weiterleiten.

Es ist selbstverständlich denkbar, die Steuereinheit 4 mit verschiedenen Sensoren auszustatten, mit deren Hilfe eine Gesamtüberwachung der Verdunstungsvorrichtung gewährleistet ist. Diese Sensoren können beispielsweise ein Füllstandssensor für den Vorratsbehälter 1, ein Temperatursensor für die Umgebungstemperatur der Verdunstungsvorrichtung, ein Ladezustandssensor für die Energieversorgung durch die Batterie oder das Akkuelement 6 und gegebenenfalls ein Gassensor für die Konzentration des Schädlingsbekämpfungsmittels innerhalb des Einsatzraumes sein. Die ermittelten Messwerte der Gassensoren und Temperatursensoren haben dabei direkten Einfluss auf die von der Dosierpumpe 2 geförderte Schädlingsbekämpfungsmittelmenge. Die Steuereinheit 4 übernimmt im Rahmen der erfindungsgemäßen Gestaltung gegebenenfalls aus Kennfeldern vorgegebene Steuergrößen für die Dosierpumpensteuerung.

Die Kommunikation zwischen dem Sender/Empfangsmodul 9 und der Anzeige- und Eingabeeinheit 11 kann dabei per herkömmlicher Verbindungsleitung drahtgebunden oder drahtlos über Funk- oder Bluetoothsignale erfolgen. Zur schematischen Darstellung der verschiedenen drahtlosen Kommunikationsmöglichkeiten ist in der Zeichnung eine wellenförmige Verbindung 12 dargestellt.

Durch die Gesamtkonzeption der neuartigen Verdunstungsvorrichtung ist nunmehr gewährleistet, dass auf einfache Weise eine optimale Schädlingsbekämpfung, beispielsweise in Bienenstöcken oder anderen geeigneten Räumlichkeiten, vorgenommen werden kann, wobei sich die gegenüber dem Stand der Technik zusätzlichen Bauteile der neuartig geregelten Ausführung der Verdunstungsvorrichtung mit am Markt verfügbaren Bauteilen konstruktiv einfach und somit kostengünstig realisieren lässt.

### Bezugszeichnungsliste

- 1: Vorratsbehälter
- 2: Dosiereinheit (Dosierpumpe)
- 3: Verdunstungselement
- 4: Steuereinheit
- 5a: Steuerleitung
- 5b: Rückmeldeleitung
- 6: Akkuelement
- 7: Versorgungsleitung
- 8: Versorgungseinheit (Solarelement)
- 9: Sender-/ Empfangsmodul
- 10: Verbindungsleitung
- 11: Anzeige- und Eingabeeinheit
- 12: Draht- oder Funkverbindung
- 13: Geregelte Flüssigkeitsmenge

## Patentansprüche

1. Verdunstungsvorrichtung zur Bekämpfung von Schädlingen, vorzugsweise in Bienenstöcken, mit einem Vorratsbehälter für das Schädlingsbekämpfungsmittel, einer Dosiereinheit zum kontrollierten Austritt des Schädlingsbekämpfungsmittels aus dem Vorratsbehälter und einem Verdunstungselement zur Vergasung des Schädlingsbekämpfungsmittels,
**dadurch gekennzeichnet, dass**
die Dosiereinheit (2) eine elektrisch betätigte und durch eine Steuereinheit (4) regelbare Dosierpumpe (2) aufweist.

2. Verdunstungsvorrichtung nach Anspruch 1
**dadurch gekennzeichnet, dass**
die Dosierpumpe (2) als Micro-Membran-Dosierpumpe ausgebildet ist.

3. Verdunstungsvorrichtung nach einem der Ansprüche 1 oder 2,
**dadurch gekennzeichnet, dass**
zur Energieversorgung (7, 8) der Dosierpumpe (2) und der Steuereinheit (4) eine Batterie oder ein Akkuelement (6) vorgesehen ist.

4. Verdunstungsvorrichtung nach Anspruch 3,
**dadurch gekennzeichnet, dass**
für die Aufladung des Akkuelementes (6) eine solarbetriebene Versorgungseinheit (8) räumlich getrennt von der Verdunstungseinrichtung angeordnet und mit einer Versorgungsleitung (7) an das Akkuelement (6) der Verdunstungsvorrichtung (3) gekoppelt ist.

5. Verdunstungsvorrichtung nach einem der Ansprüche 1 bis 4,
**dadurch gekennzeichnet, dass**
die Steuereinheit (4) ein Sender/Empfangsmodul (9) aufweist, durch welches Einstelldateien und Verbrauchsdaten an ein räumlich von der Verdunstungseinheit (3) getrennt angeordnetes Anzeige- und Eingabemodul (11) übermittelbar sind.

6. Verdunstungsvorrichtung nach Anspruch 5
**dadurch gekennzeichnet, dass**
das Sender- und Empfangsmodul (9) eine drahtgebundene Kommunikationsverbindung mit der Anzeige- und Eingabeeinheit (11) bereitstellt.

7. Verdunstungsvorrichtung nach Anspruch 5
**dadurch gekennzeichnet, dass**
das Sender- und Empfangsmodul (9) eine drahtlose Kommunikationsverbindung mit der Anzeige- und Eingabeeinheit (11) bereitstellt.

8. Verdunstungsvorrichtung nach einem der Ansprüche 5 bis 7,
**dadurch gekennzeichnet, dass**
das Eingabemodul (11) als Tastatureinheit ausgebildet ist.

9. Verdunstungsvorrichtung nach einem der Ansprüche 1 bis 8,
**dadurch gekennzeichnet, dass**
die Dosierpumpe (2) räumlich über dem Vorratsbehälter (1) angeordnet ist.
